# EUROPÄISCHE PATENTSCHRIFT

(11) **EP 1 112 204 B1**
(45) Veröffentlichungstag und Bekanntmachung des Hinweises auf die Patenterteilung: **19.03.2003**
(21) Anmeldenummer: 99950458.2
(22) Anmeldetag: 29.07.1999
(51) Int. Cl.: B60R 25/04

(54) **VORRICHTUNG ZUR BESTIMMUNG DER FAHRBERECHTIGUNG**
DEVICE FOR DETERMINING DRIVING AUTHORIZATION
DISPOSITIF POUR DETERMINER SI UNE PERSONNE EST AUTORISEE A CONDUIRE UN VEHICULE

(30) Priorität: 17.09.1998 DE 19842544
(43) Veröffentlichungstag der Anmeldung: 04.07.2001
(73) Patentinhaber: ROBERT BOSCH GMBH, 70442 Stuttgart (DE)
(72) Erfinder: WEIGL, Andreas, D-76351 Linkenheim-Hochstetten (DE); HAULER, Peter, D-76275 Ettlingen (DE); WEISS, Karl-Ernst, D-76275 Ettlingen (DE); PETTIT, Roderick, D-71144 Steinenbronn (DE); MOSER, Ralf, D-71665 Vaihingen/Enz (DE); HACKER, Heidrun, D-71282 Hemmingen (DE); SCHROFF, Clemens, D-76698 Ubstadt-Weiher (DE); HUGEL, Robert, D-76199 Karlsruhe (DE); SCHIRMER, Juergen, D-69124 Heidelberg (DE); WALTHER, Michael, D-71696 Möglingen (DE); KLAIBER, Tobias, D-71665 Vaihingen/Enz (DE)
(86) Internationale Anmeldenummer: DE9902334
(87) Internationale Veröffentlichungsnummer: WO00017020

(56) Entgegenhaltungen:
- WO-A-97/43151
- DE-A- 4 331 300
- DE-A- 4 344 481
- FR-A- 2 759 959

## Beschreibung

### Stand der Technik

Die Erfindung geht aus von einer Vorrichtung zur Bestimmung der Fahrberechtigung nach der Gattung der beiden unabhängigen Ansprüche 1 und 2. Aus der DE 43 32 411 A1 ist ein Diebstahlschutz für Kraftfahrzeuge mit mehreren Steuergeräten für Fahrzeugkomponenten bekannt. Unterschiedliche Steuergeräte können bei Übereinstimmen einer eingegebenen Prüfinformation mit einer vorgegebenen Referenzinformation freigeschaltet werden. Für zumindest zwei Steuergeräte unterscheiden sich die Prüf- und die Referenzinformationen voneinander. Als Prüf- bzw. Referenzinformation ist der Fingerabdruck eines berechtigten Benutzers vorgesehen.

Die zur Inbetriebnahme notwendige Freischaltung der Steuergeräte läßt sich nur bei Anwesenheit eines durch ein biometrisches Identifikationsverfahren als berechtigt nachgewiesenen Benutzers vornehmen. Bei bestimmten Situationen ist jedoch eine in der Regel nur kurzzeitige Benutzung durch beispielsweise das Werkstattpersonal oder Hotelangestellte wünschenswert, was bei oben genannter Druckschrift nur über das Einlernen eines als berechtigt angesehenen Fingerabdrucks möglich ist. Aus der gattungsbildenden DE-A-4344481 ist ein Kontrollsystem für Zugang oder Bedienung mit den Merkmalen des Oberbegriffs der Ausprüche 1 und 2 bekannt. Neben der Freigabe über Körpermerkmale im Standardmodus erlaubt eine Magnetkarte für Werkstattbesuche die Freigabe der Fahrzeugfunktionen, so dass ein Monteur mit dem Fahrzeug umgehen kann. Für das Lernen von weiteren Referenzdaten zur Zuweisung der Berechtigung für weitere Personen ist ein Identifikationsmittel notwendig. Alternativ besteht die Möglichkeit, dass der Fahrzeughalter einen Identifikationscode auf der Magnetkarte selbst ändert und das Kontrollsystem diesen Code ebenfalls lernt, wenn die Leseeinheit für Fingerabdrücke die Betriebsberechtigung erteilt.

### Vorteile der Erfindung

Die bekannte Vorrichtung zur Bestimmung der Fahrberechtigung eines Fahrzeugs weist eine Biometriedatenerfassung auf, die Biometriedaten eines Benutzers erfaßt und als ggf. verschlüsseltes Biometriesignal einer Auswerteeinheit zuführt. In zumindest einem Biometrieprofilspeicher ist zumindest ein Biometrieprofil hinterlegt. Eine Berechtigungsfreigabe zum Betrieb des Fahrzeugs erfolgt dann, wenn das Biometriesignal und das Biometrieprofil übereinstimmen. Die erfindungsgemäße Vorrichtung zeichnet sich dadurch aus, daß die Berechtigungsfreigabe auch dann erfolgt, wenn ein von einer Codeerfassung erfaßtes Betriebsmittelsignal mit einem Betriebsmittelcode übereinstimmt wobei als Biometrieprofil ein Masterbiometrieprofil und ein Normalbiometrieprofil vorgesehen sind, wobei nur bei einer Übereinstimmung von dem Biometriesignal mit dem Masterbiometrieprofil ein Zugriff auf den Biometrieprofilspeicher und/oder einen den Betriebsmittelcode speichernden Betriebsmittelspeicher möglich ist. Eine Berechtigungsfreigabe des Fahrzeugs kann somit auch durch einen Benutzer erfolgen, dessen Biometrieprofil nicht in dem Biometrieprofilspeicher hinterlegt ist. Ein von einem bekannten Betriebsmittel, wie beispielsweise einem Transponder, einem Schlüssel, einer sogenannten Smart-Card, einer Fernbedienung oder der Tastatureingabe eines hinterlegten Zahlencodes, abgegebener Betriebsmittelcode führt dann zur Freigabe des Fahrzeugs, wenn das von einer Codeerfassung erfaßte Betriebsmittelsignal mit einem als gültig erkannten Betriebsmittelcode übereinstimmt. Dank dieser zweiten Möglichkeit, eine übertragbare Berechtigungsfreigabe des Fahrzeugs zu erhalten, werden die bei einem nur die Biometrie berücksichtigenden Identifikationsverfahren auftretenden Probleme entschärft, wenn beispielsweise der Hauptberechtigte, im folgenden mit Master bezeichnet, sich in Fällen der Ohnmacht oder einer Verletzung nicht biometrisch ausweisen kann. In zweckmäßiger Weiterbildung erlaubt das Betriebsmittel außer der Inbetriebnahme des Fahrzeugs auch das Ent-/Verriegeln der Fahrzeugtüren (=Zugang).

In einer alternativen Ausgestaltung ist eine Vorrichtung zur Bestimmung der Fahrberechtigung eines Fahrzeugs vorgesehen, mit einer Biometriedatenerfassung, die Biometriedaten eines Benutzers erfaßt und als Biometriesignale einer Auswerteeinheit zuführt, mit zumindest einem Biometrieprofilspeicher, in dem zumindest ein Biometrieprofil hinterlegt ist, wobei eine Berechtigungsfreigabe zur Nutzung von Funktionen des Fahrzeugs dann erfolgt, wenn das Biometriesignal und das Biometrieprofil übereinstimmen, wobei die Berechtigungsfreigabe auch dann erfolgt, wenn ein von einer Codeerfassung erfaßtes Betriebsmittelsignal mit einem Betriebsmittelcode übereinstimmt, dadurch gekennzeichnet, dass als Biometrieprofil ein Masterbiometrieprofil und ein Normalbiometrieprofil vorgesehen sind, wobei bei einer Übereinstimmung von dem Biometriesignal mit dem Normalbiometrieprofil eine Berechtigungsfreigabe nur in beschränktem Umfang gegeben ist.

In einer zweckmäßigen Weiterbildung ist vorgesehen, daß bei einer Übereinstimmung von Betriebsmittelsignal und Betriebsmittelcode eine Berechtigungsfreigabe des Fahrzeugs nur in beschränktem Umfang möglich ist. Diese Beschränkung könnte beispielsweise die Nutzungsdauer, die Fahrzeit, die Fahrstrecke, die Gangwahl, die Drehzahl oder die Zugangsfunktion oder auch Kombinationen davon betreffen. Der sich nicht über die Biometrie ausweisende Personenkreis muß solche Nutzungseinschränkungen des Kraftfahrzeugs hinnehmen. Damit ist die Gefahr eines Mißbrauchs eines übertragbaren, nichtbiometrischen Betriebsmittels reduziert, da bei einer Überschreitung der vorgegebenen Ressourcen, wie beispielsweise die Nutzungsdauer oder die Fahrstrecke, eine Stillsetzung des Fahrzeugs eingeleitet wird.

Eine vorteilhafte Ausgestaltung sieht eine Einspeicherung oder Änderung der Betriebsmittelressourcen nur bei Vorliegen eines Biometriesignals und dessen Übereinstimmung mit einem vorhandenen Biometrieprofil vor. Der sich über die Biometriedaten ausweisende berechtigte Benutzer kann die Nutzungsbeschränkungen für einen sich lediglich über ein nichtbiometrisches Betriebsmittel ausweisenden Benutzer in einem von dem biometrisch identifizierten berechtigten Benutzer zugewiesenen Umfang verändern. Dadurch können Manipulationen eines sich nur durch das Betriebsmittel ausweisenden Benutzers wirksam verhindert werden. Als Alternative sind die Betriebsmittelressourcen selbst auch dann nicht überschreibbar, wenn ein sich durch bekannte Biometriedaten ausweisender Benutzer eine Änderung wünscht.

Eine vorteilhafte Ausgestaltung sieht ein Normalbiometrieprofil vor, wobei bei Übereinstimmung des Biometriesignals mit dem Normalbiometrieprofil eine Berechtigungsfreigabe nur in von einem Master vorgegebenen beschränktem Umfang möglich ist. Dem sich über das Normalbiometrieprofil ausweisenden Normalberechtigten steht das Fahrzeug zwar nur beschränkt zur Verfügung, jedoch ist der Nutzungsumfang wesentlich weiter gesteckt als beispielsweise im Hotelbetriebsmodus oder im Werkstattbetriebsmodus. Als Normalberechtigte kommen beispielsweise Familienangehörige des Masters in Betracht, die das Fahrzeug beispielsweise nur mit einer nicht zu überschreitenden Höchstgeschwindigkeit betreiben dürfen, zum Beispiel Führerscheinneulinge. Vorteilhafterweise können solche Normalbenutzer im Rahmen des innen von einem Master zugewiesenen Normalbenutzerprofils Ressourcen für Betriebsmittel begrenzt häufig auf Anfangswerte zurücksetzen (z. B. mehrtägiger Werkstattaufenthalt).

In einer vorteilhaften Weiterbildung kann ein weiteres Biometrieprofil und/oder ein weiterer Betriebsmittelcode und Zuordnung von Ressourcen nur dann abgespeichert werden, wenn das dazu notwendige Biometriesignal mit dem Biometrieprofil eines Masters übereinstimmt. Damit wird eine weitere Hierarchisierung eines Anlernkonzepts unterstützt, indem lediglich ein Master dazu berechtigt ist, weitere sich durch biometrische Verfahren ausweisende Benutzer oder Betriebsmittel zur Auslösung der Berechtigungsfreigabe mit unterschiedlichen Berechtigungen anzulernen. Auch weitere Funktionen wie Löschen von Biometrieprofilen oder Betriebsmittelcodes kann nur ein Master durchführen. Auch die Auswahl und das Aufrufen dazu geeigneter Betriebsarten des Systems stehen uneingeschränkt nur einem Master zur Verfügung.

In einer zweckmäßigen Weiterbildung ist ein Zugriff auf den Biometrieprofilspeicher über eine Diagnoseschnittstelle möglich. Bei einem Weiterverkauf des Fahrzeugs läßt sich über die Diagnoseschnittstelle das Biometrieprofil des bisherigen Masters löschen und durch das des neuen Eigentümers ersetzen. Eine solche Änderung könnte beispielsweise auch nur in Verbindung mit einer Herstellerdatenbank vorgenommen werden. Dadurch reduziert sich die Gefahr des Mißbrauchs.

Eine vorteilhafte Weiterbildung sieht vor, daß auch mit einem speziellen Sonderbetriebsmittel die zum Anlernen, Löschen oder Ändern bzw. Speichern von Biometrieprofilen und Ressourcen vorgesehenen Betriebsarten ausgewählt und entsprechende Vorgänge durchgeführt werden können. Das Sonderbetriebsmittel - vorzugsweise ein fälschungs- und auslesegeschützter Transponder - ist einmalig für jedes Fahrzeug und enthält einen speziellen Code. In vorteilhafter Weise erlaubt dieser Code keine anderen uneingeschränkten Fahrzeugfunktionen, um ein Mitführen für den täglichen Gebrauch des Fahrzeugs zu vermeiden. Damit jedoch ein neuer Fahrzeuginhaber nach Kauf des Fahrzeugs die Möglichkeit zu einer Überführungsfahrt hat, ist bei Inbetriebnahme mittels dieses Sonder-Betriebsmittels keine unbegrenzte Fahrzeugbenutzung und der Zugang zum Fahrzeug nur über eine einzige Tür möglich.

Weitere zweckmäßige Weiterbildungen ergeben sich aus weiteren abhängigen Ansprüchen und aus der Beschreibung.

### Zeichnung

Ein Ausführungsbeispiel der Erfindung ist in der Zeichnung dargestellt und wird im folgenden näher beschrieben.

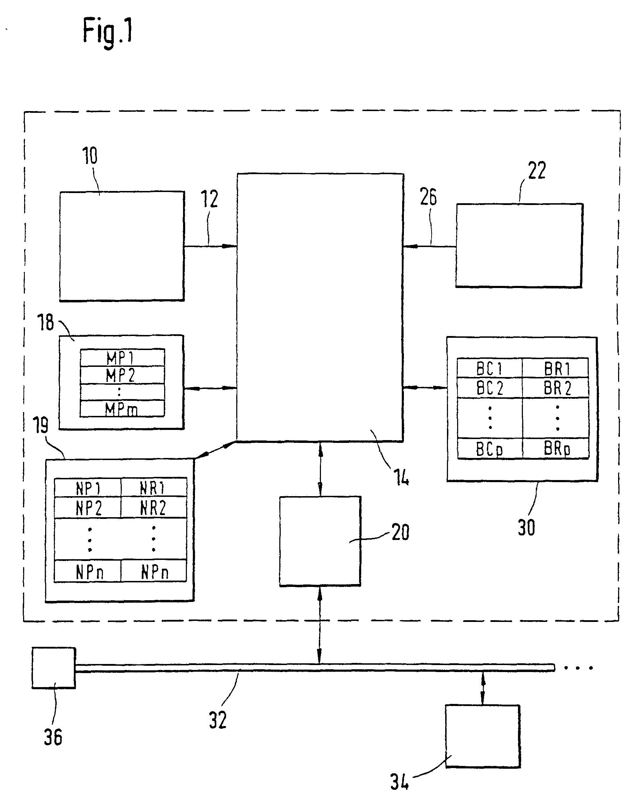

Es zeigen die Figur 1 ein Blockschaltbild, die Figuren 2 und 3 Flußdiagramme der erfindungsgemäßen Vorrichtung.

### Beschreibung

Eine Biometriedatenerfassung 10 gibt ein Biometriesignal 12 an eine Auswerteeinheit 14 ab. In einem Masterbiometrieprofilspeicher 18 sind ein erstes Masterbiometrieprofil MP1 des ersten Masters, ein zweites Masterbiometrieprofil MP2 eines zweiten Masters und ein m-tes Masterbiometrieprofil MPm eines m-ten Masters hinterlegt. In einem Normalbiometrieprofilspeicher 19 sind ein erstes Normalbiometrieprofil NP1 eines ersten Normalberechtigten, ein zweites Normalbiometrieprofil NP2 eines zweiten Normalberechtigten, sowie ein n-tes Normalbiometrieprofil NPn eines n-ten Normalberechtigten hinterlegt. Erstem, zweitem und n-tem Normalbiometrieprofil NP1, NP2, NPn sind jeweils erste, zweite und n-te Normalberechtigtenressource NR1, NR2, NRn zugeordnet. Masterbiometrieprofilspeicher 18 und Normalbiometrieprofilspeicher 19 können mit der Auswerteeinheit 14 Signale austauschen. Eine Codeerfassung 22 gibt ein Betriebsmittelsignal 26 an die Auswerteeinheit 14 ab. In einem Betriebsmittelspeicher 30 sind erster Betriebsmittelcode BC1 eines ersten Betriebsmittels, ein zweiter Betriebsmittelcode BC2 eines zweiten Betriebsmittels sowie ein p-ter Betriebsmittelcode BCp hinterlegt. Den jeweiligen Betriebsmittelcodes BC1, BC2, BCp sind jeweils eine erste Betriebsmittelressource BR1, zweite Betriebsmittelressource BR2 und p-te Betriebsmittelressource BRp zugeordnet. Zweckmäßigerweise sind hier auch der ab Hersteller vorhandene Betriebsmittelcode des Sonderbetriebsmittels und die dem Sonderbetriebsmittel zugeordneten Funktionsumfänge und Ressourcen abgespeichert. Betriebsmittelspeicher 30 und Auswerteeinheit 14 tauschen Signale aus. Die Auswerteeinheit 14 gibt ein Signal an eine Berechtigungsfreigabe 20 ab, die vorzugsweise mit einem Bussystem 32 in Verbindung steht. An das Bussystem 32 sind beispielhaft ein Motorsteuergerät 14 und eine Diagnoseschnittstelle 36 angeschlossen.

Die von der Biometriedatenerfassung 10 erfaßten Biometriedaten werden als benutzerspezifische Merkmale angesehen. Solche biometrischen Merkmale wie Fingerabdruck, Augenstand, Iris, Netzhaut oder Spracherfassung - um nur einige zu nennen - weisen einen rechtmäßigen Benutzer eindeutig aus und sind als Masterbiometrieprofil MP1, MP2, MPm oder Normalbiometrieprofil NP1, NP2, NPn in digitalisierter Form in den entsprechenden Speichern 18, 19 hinterlegt. Im weiteren soll davon ausgegangen werden, daß als biometrisches Identifikatonsverfahren die Überprüfung des Fingerabdrucks herangezogen wird. In diesem Zusammenhang kommt als Biometriedatenerfassung 10 beispielsweise ein Scanner in Betracht.

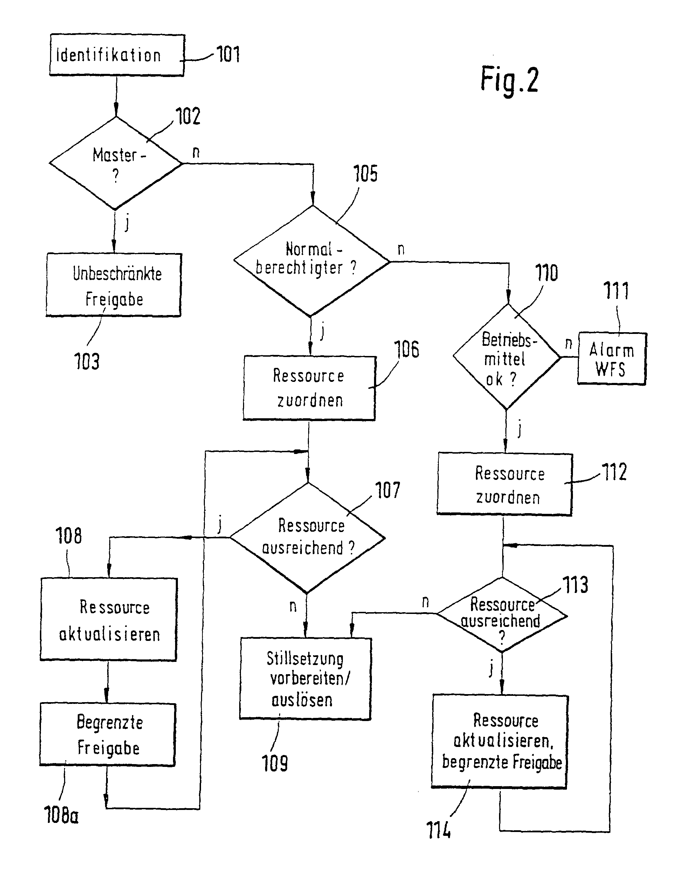

Anhand des Flußdiagramms gemäß Figur 2, z. B. bei einem Fingerabdruckverfahren, wird der Betrieb der erfindungsgemäßen Vorrichtung bei Fahrzeuginbetriebnahme und Zuweisungen von Beschränkungen der Fahrzeugnutzbarkeit näher erläutert. Die Identifikation wird gestartet (Schritt 101), indem beispielsweise ein mit der Fingerabdruckerfassung in Verbindung stehender Taster durch den Benutzer betätigt oder ein eingehendes Betriebsmittelsignal 26 erkannt wird. Der Auswerteeinheit 14 werden daraufhin die entweder von der Biometriedatenerfassung 10 oder von der Codeerfassung 22 gelieferten Daten übermittelt.

Die sich anschließende Abfrage 102 stellt fest, ob es sich bei der Person, die das Fahrzeug zu benutzen wünscht, um einen der Master 1-m handelt. Dazu vergleicht die Auswerteeinheit 14 das in dem Schritt 101 eingelesene Signal mit den Masterbiometrieprofilen MP1, MP2, MPm. Bei einer der geforderten Sicherheit entsprechenden, hinreichend genauen Übereinstimmung erfolgt eine unbegrenzte Freigabe des Fahrzeugs, Schritt 103. Stellt die Auswerteeinheit 14 keine Übereinstimmung zwischen dem im Schritt 101 erfaßten Signal und den im Masterbiometrieprofilspeicher 18 hinterlegten Masterbiometrieprofilen MP1, MP2, MPm fest, wird eine nächste Abfrage 105 eingeleitet, in der festgestellt wird, ob ein Normalberechtigter das Fahrzeug in Betrieb nehmen möchte. Die Auswerteeinheit 14 vergleicht das in Schritt 101 gewonnene Identifikationssignal mit den in dem Normalbiometrieprofilspeicher 19 hinterlegten Normalbiometrieprofilen NP1, NP2, NPn. Im Falle einer Übereinstimmung wird dem jeweiligen Normalberechtigten die zugehörige Normalberechtigtenressource NR1, NR2, NRn zugeordnet, Schritt 106. Beispielhaft werde angenommen, daß der zweite Normalberechtigte das Fahrzeug betreiben möchte. Die Auswerteeinheit 14 ermittelt die dem zweiten Normalbiometrieprofil NP2 zugehörige (zweite) Normalberechtigtenressource NR2. In dieser Normalberechtigtenressource ist beispielsweise festgelegt, daß der zweite Normalberechtigte das Fahrzeug nur mit einer vorgegebenen Höchstgeschwindigkeit von 130 km/h betreiben darf. Hierzu wird eine entsprechende Information in dem Motorsteuergerät 34 aktiviert. Als alternative Normalberechtigtenressource könnte auch die maximal zugelassene Fahrstrecke vorgesehen werden. In diesem Fall wird die Normalberechtigtenressource NR2 daraufhin überprüft, ob die festgelegten Grenzwerte bereits überschritten wurden, Abfrage 107. Falls die Normalberechtigtenressource NR2 den Grenzwert noch nicht überschreitet, (d. h. die Ressource ist ausreichend) wird das Fahrzeug freigegeben und die Aktualisierung der Normalberechtigtenressource, NR2 z. B. die Berechnung der noch verfügbaren Fahrstrecke zugelassen, Schritt 108. Die Freigabe erfolgt in begrenztem Umfang, Schritt 108a. Wurde die Normalberechtigtenressource NR2 überschritten, wie in Abfrage 107 festgestellt, wird die Stillsetzung des Fahrzeugs vorbereitet und gegebenenfalls durchgeführt, Schritt 109. An den Schritt 108a schließt sich die erneute Abfrage 107 an.

Die erfindungsgemäße Vorrichtung läßt als weitere Möglichkeit der Inbetriebnahme die Verwendung eines berechtigten Betriebsmittels zu. In diesem Fall erhält die Codeerfassung 22 ein von dem Betriebsmittel abgegebenes Signal. Als Betriebsmittel kommt beispielsweise ein auf das Fahrzeug angelernter Transponder in Betracht. Dieser sendet ein Signal, das einer Berechtigungsprüfung, die nicht Gegenstand der Beschreibung ist, unterzogen wird. Die Berechtigungsprüfung kann beispielsweise auf einem bekannten sogenannten Rolling-Code-Verfahren oder einem Challenge-Response-Verfahren beruhen. Als weitere Betriebsmittel können auch Tastenfelder, versteckte Schalter oder eine Fernbedienung oder eine zweite Biometrieerfassung, die ein weiteres Biometriesignal erfaßt, verwendet werden. Stimmt das so erfaßte und gegebenenfalls weiter verarbeitete Signal mit einem der Betriebsmittelcodes BC1, BC2, BCP überein, Abfrage 110, wird dem so als berechtigt identifizierten Betriebsmittel die entsprechende Betriebsmittelressource BR1, BR2, BRP zugeordnet, Schritt 112. Die erste Betriebsmittelressource BR1 ist beispielsweise so gewählt, daß sie für den Werkstattbetrieb geeignet ist. So darf der sich so ausweisende Benutzer beispielsweise lediglich eine beschränkte Strecke zurücklegen und das Auto maximal für mehrere Tage betreiben. Ansonsten stehen die Fahrzeugfunktionen wie beispielsweise die Höchstgeschwindigkeit usw. uneingeschränkt zur Verfügung, um eine vollständige Überprüfung des Fahrzeugs zu ermöglichen. Die Auswerteeinheit 14 überprüft in einer Abfrage 113 ständig, ob die in der Betriebsmittelressource BR1 vorgegebenen Obergrenzen noch nicht überschritten wurden. Bei Überschreiten wird die Stillsetzung vorbereitet, Schritt 109. Andernfalls wird das Fahrzeug entsprechend freigegeben sowie eine Aktualisierung der zur überwachenden Betriebsmittelressource vorgenommen, Schritt 114.

Die zweite Betriebsmittelressource BR2 kann beispielsweise so gewählt werden, daß sie für den Hotelbetrieb geeignet ist. Wiederum kann hierbei die nicht zu überschreitende Strecke, die Höchstgeschwindigkeit oder die Anzahl der wählbaren Gänge (erster und zweiter Gang, sowie Rückwärtsgang) vorgegeben werden. Auch eine Einschränkung der Schließfunktion (der Kofferraum und/oder das Handschuhfach lassen sich beispielsweise nicht öffnen) ist möglich.

Falls das im Schritt 101 erfaßte Signal nicht auf ein zulässiges Betriebsmittel schließen läßt, kann in einem Schritt 111 ein Alarm und/oder eine Wegfahrsperrenfunktion aktiviert werden.

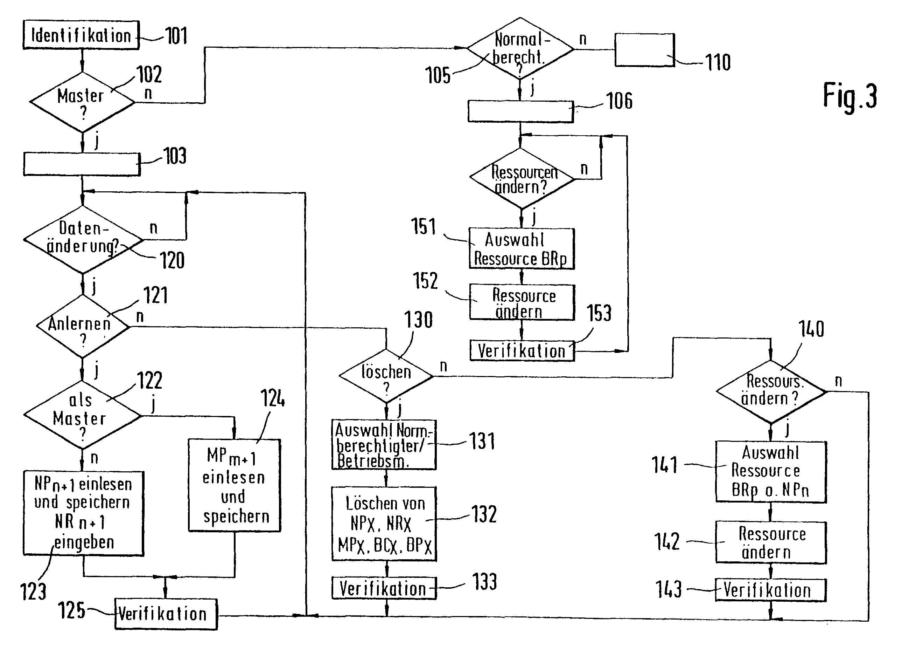

Das Ablaufdiagramm gemäß Figur 3 stellt eine erweiterte Funktion der Vorrichtung dar, die eine Änderung der in Masterbiometrieprofilspeicher 18, Normalbiometriespeicher 19 und Betriebsmittelspeicher 30 hinterlegten Daten ermöglicht. In Übereinstimmung mit Figur 2 schließt sich an den Identifikationsschritt 101 eine Abfrage 102 an, ob es sich bei dem Benutzer um einen Master handelt. Bejahendenfalls schließt sich Schritt 103 mit unbeschränktem Zugriff auf alle Fahrzeugfunktionen an. Jetzt ist auch die Abfrage, Schritt 120, möglich, die dem Master die Möglichkeit einer Datenänderung eröffnet. Falls dies verneint wird, verbleibt das System im Zustand von Schritt 103 - wie bereits erläutert. Somit kann jederzeit auf die Funktionen des Schrittes 121 zugegriffen werden. Dieser Schritt bleibt solange aktiv, bis Zündung aus oder Anlernen gewünscht. Dem Benutzer wird vorteilhafterweise menügeführt die Möglichkeit gegeben, eine Datenänderung gezielt herbeizuführen. Die Abfragen 121, 130, 140 stellen beispielhaft drei mögliche Datenänderungsvorgänge vor. Möchte der Master in den Anlernvorgang wechseln, Abfrage 121, muß er beispielsweise eine Auswahltaste bedienen. In dieser Betriebsart wird ein weiteres Biometrieprofil eingelernt. Eine Vergabe unterschiedlicher Zugriffsrechte ist in Abfrage 122 vorgesehen, die die Möglichkeit eröffnet, einem weiteren Benutzer unbeschränkte Berechtigung als Master zu erteilen oder die ggf. beschränkten Rechte eines Normalberechtigten zu übertragen. Falls der neue Benutzer als Normalberechtigter eingelernt werden soll, Schritt 123, muß der Master die entsprechende Option auswählen. Der neue Normalberechtigte legt beispielsweise seinen Finger auf die Biometriedatenerfassung 10, die Auswerteeinheit 14 speichert das so erfaßte Normalbiometrieprofil NPn+1 an der Stelle n+1. Darüber hinaus gibt der Master über ein Tastenfeld, einen Touch-Screen o. ä. die Normalberechtigtenressource NRn+1 für den neu hinzugekommenen Normalberechtigten ein.

Ergibt die Abfrage 122, daß der neue Benutzer eine Masterberechtigung erhalten soll, wird im Schritt 124 das Masterbiometrieprofil MPm+1 eingelesen, indem der neu anzulernende Master über die Biometriedatenerfassung 10 der Auswerteeinheit 14 sein Fingerabdruckprofil zur Verfügung stellt. Aufgrund der damit verbundenen unbeschränkten Benutzungsrechte des Fahrzeugs schließt sich eine Verifikationsabfrage 125 an. Hierzu muß der anlernende, bereits bekannte Master nochmals mit seinem Fingerabdruck den gewünschten Anlernvorgang bestätigen. In bekannter Weise überprüft die Auswerteeinheit 14, ob der Fingerabdruck des anlernenden Masters als gültiges Masterbiometrieprofil MP1, MP2, MPm in dem Masterbiometrieprofilspeicher 18 hinterlegt ist. Ist dies der Fall, ist der Anlernvorgang eines neuen Masters abgeschlossen, so daß das zuvor zwischengespeicherte Masterbiometrieprofil MPm+1 des neuen Masters in den Masterbiometriespeicher 18 hinterlegt wird. Ergibt sich in der Verifikation 125 keine Übereinstimmung zwischen Biometriesignal 12 und Masterbiometrieprofil MP1, MP2, MPm, wird gegebenenfalls Schritt 121 über Schritt 120 nochmals durchlaufen, bevor es zum endgültigen Abbruch der Anlernprozedur eines neuen Masters kommt. Nach mehreren erfolglosen Anlernprozeduren kann das Fahrzeug auch stillgelegt werden.

Bestätigt der Master in der Abfrage 121 den Wunsch, keinen Anlernvorgang durchzuführen, sieht das Menü als nächsten Abfragepunkt vor, ob der Master einem Normalberechtigten oder einem Betriebsmittel die Berechtigung entziehen möchte, Abfrage 130. Bei Bestätigung wird dem Master ein Auswahlmenü zur Auswahl des Normalberechtigten oder des Betriebsmittels, dessen Daten der Master löschen möchte, angezeigt, Schritt 131. Nach der Auswahl des zu löschenden Normalberechtigten oder Betriebsmittels folgt eine Quittungssequenz (Verifikation) 133 der Löschungsbestätigung. In der Folge wird das Normalbiometrieprofil NPx des ausgewählten Normalberechtigten x aus dem Normalbiometrieprofilspeicher 19 bzw. der betriebsmittelcode und die zugeordneten Ressourcen aus dem Speicher 30 gelöscht, Schritt 132.

Verneint der Master den Wunsch, einem Normalberechtigten oder einem Betriebsmittel die Berechtigung zu entziehen, erfolgt eine Abfrage, ob der Master eine Ressource ändern möchte, Abfrage 140. Bei einer Bestätigung dieses Wunsches wird dem Master vorzugsweise menügeführt eine Auswahl der zu ändernden Ressourcen, entweder die Normalberechtigtenressource NP1, NP2, NPn oder die Betriebsmittelressource BR1, BR2, BRp angeboten. Je nach ausgewählter Ressource wird dem Master die Möglichkeit gegeben, die Ressourcenparameter wie beispielsweise Strecke, Fahrtzeit, Nutzungsdauer, Höchstgeschwindigkeit, zugelassene Gangwahl, Zugriff auf Schließfunktionen usw. zu ändern, Schritt 142. Wird eine Ressourcenänderung verneint oder keine Verifikation 143 erfolgreich ausgeführt, endet das Änderungsmenü mit Rückkehr zu Schritt 103.

Wird in der Abfrage 102 festgestellt, daß es sich bei der den Identifikationsvorgang auslösenden Person nicht um einen Master handelt, schließt sich eine Abfrage 105 an, in der das erfaßte Biometriesignal 12 mit dem Normalbiometrieprofil NP1, NP2, NPn verglichen wird. Stimmt eines der Normalbiometrieprofile NP1, NP2, NPn mit dem Biometriesignal 12 überein, erfolgt die mehr oder weniger beschränkte Freigabe Schritt 106. Darin wird dem als Normalberechtigten identifizierten Benutzer u. a. ein Menü angeboten, das dem Normalberechtigten die Möglichkeit eröffnet, eine Ressourcenänderung der Betriebsmittelressourcen BR1, BR2, BRp vorzunehmen. Wird dies nicht gewünscht, verbleibt das System im Zustand von Schritt 106, der bereits im Zusammenhang mit Figur 2 diskutiert wurde. Andernfalls werden dem Normalberechtigten über vorzugsweise ein Menü die änderbaren Ressourcen angezeigt. Als Normalberechtigtem steht ihm nur die Berechtigung für eine Modifikation der Betriebsmittelressourcen BR1, BR2, BRp zu, Schritt 151. Nach getroffener Auswahl nimmt der Normalberechtigte die Änderung vor, die in dem Betriebsmittelspeicher 30 hinterlegt wird. Anlernen neuer Master oder Normalberechtigter sowie die Änderung der Normalberechtigtenressourcen können Normalberechtigte nicht vornehmen. Zum Abschließen aller Prozeduren zur Änderung von Daten, Ressourcen etc. ist eine erfolgreiche Verifikation (Schritte 125, 133, 143, 153) der diese Daten ändernden Person gefordert.

Zudem wird über die Diagnoseschnittstelle 36 eine Möglichkeit eröffnet, auf den Masterbiometrieprofilspeicher 18 zuzugreifen, wenn beispielsweise eine Fahrzeugübereignung ansteht, und sich der Master ändert. Eine autorisierte Fachwerkstatt kann beispielsweise nur in Verbindung mit einem in einer Herstellerdatenbank hinterlegten Zugriffscode eine Löschung des Masterbiometrieprofilspeichers 18, des Normalbiometrieprofilspeichers 19 und des Betriebsmittelspeichers 30 herbeiführen, um anschließend eine Master-Anlernprozudur zu starten, wie sie beispielsweise in Figur 3 mit dem bereits beschriebenen Schritt 124 möglich ist. Die Verifikationsabfrage 125 kann unterbleiben, wenn durch geeignete, hier nicht näher beschriebene Maßnahmen sichergestellt wird, daß die benutzte Werkstatt bzw. -Einrichtung tatsächlich dazu autorisiert ist, so daß sich sofort der Schritt 126 in beschriebener Weise anfügt. Bei dem Eingriff über die Diagnoseschnittstelle 36 könnte auch vorgesehen sein, die Ressourcen mit voreingestellen Werten zu überschreiben, wie sie beispielsweise bei der Bandendeprogrammierung vorgesehen sind.

Für höchste Sicherheitsansprüche kann auch vorgesehen werden, daß auch im Fall einer Daten- und Berechtigungsänderung in einer Fachwerkstatt mit deren Einrichtung, die an die Diagnose - oder eine andere dafür geeignete Schnittstelle angeschlossen ist, eine abschließende Verifikation mit den biometrischen Merkmalen eines der bisherigen Master oder zumindest mit dem zuvor erwähnten Sonder-Betriebsmittel durchgeführt werden muß.

In einer vereinfachten alternativen Ausgestaltung kann auf die nutzerabhängige Ressourcenzuordnung verzichtet werden. Hierbei steht insbesondere die sogenannte Bypaßfunktion im Vordergrund. Dem Benutzer wird das Fahrzeug freigegeben, wenn er sich entweder über ein als berechtigt erkanntes Biometriesignal 12 oder über ein als berechtigt erkanntes Betriebsmittelsignal 26 eines Betriebsmittels, des soganannten Bypass', ... ausweist. Hierzu werden, wie bereits beschrieben - die Abfragen 102, 105 und 110 durchlaufen. Erfüllt eine dieser Abfragen 102, 105 und 110 die geforderte Bedingung, wird das Fahrzeug unbegrenzt freigegeben. Dadurch läßt sich zum einen der Aufwand für die vorgehend beschriebenen Prozeduren verringern, andererseits ist die gewünschte Übertragbarkeit gewährleistet. Die beschriebene Vorrichtung läßt sich auch in Verbindung mit einer Zugangsberechtigung einsetzen.

## Patentansprüche

1. Vorrichtung zur Bestimmung der Fahrberechtigung eines Fahrzeugs, mit einer Biometriedatenerfassung (10), die Biometriedaten eines Benutzers erfaßt und als Biometriesignal (12) einer Auswerteeinheit (14) zuführt, mit zumindest einem Biometrieprofilspeicher (18, 19), in dem zumindest ein Biometrieprofil (MP1, MP2, ..., MPm, NP1, NP2, ... NPm) hinterlegt ist, wobei eine Berechtigungsfreigabe (20) zur Nutzung von Funktionen des Fahrzeugs dann erfolgt, wenn das Biometriesignal (12) und das Biometrieprofil (MP1, MP2, ..., MPm, NP1, NP2, ... NPm) übereinstimmen, wobei die Berechtigungsfreigabe (20) auch dann erfolgt, wenn ein von einer Codeerfassung (22) erfaßtes Betriebsmittelsignal (26) mit einem Betriebsmittelcode (BC1, BC2, ..., BCp) übereinstimmt, **dadurch gekennzeichnet, daß** als Biometrieprofil ein Masterbiometrieprofil (MP1, MP2, ..., MPm) und ein Normalbiometrieprofil (NP1, NP2, ... NPm) vorgesehen sind, wobei nur bei einer Übereinstimmung von dem Biometriesignal (12) mit dem Masterbiometrieprofil (MP1, MP2, ..., MPm) ein Zugriff auf den Biometrieprofilspeicher (18, 19) und/oder einen den Betriebsmittelcode (BC1, BC2, ..., BCp) speichernden Betriebsmittelspeicher (30) möglich ist.

2. Vorrichtung zur Bestimmung der Fahrberechtigung eines Fahrzeugs, mit einer Biometriedatenerfassung (10), die Biometriedaten eines Benutzers erfaßt und als Biometriesignal (12) einer Auswerteeinheit (14) zuführt, mit zumindest einem Biometrieprofilspeicher (18, 19), in dem zumindest ein Biometrieprofil (MP1, MP2, ..., MPm, NP1, NP2, ... NPm) hinterlegt ist, wobei eine Berechtigungsfreigabe (20) zur Nutzung von Funktionen des Fahrzeugs dann erfolgt, wenn das Biometriesignal (12) und das Biometrieprofil (MP1, MP2, ..., MPm, NP1, NP2, ... NPm) übereinstimmen, wobei die Berechtigungsfreigabe (20) auch dann erfolgt, wenn ein von einer Codeerfassung (22) erfaßtes Betriebsmittelsignal (26) mit einem Betriebsmittelcode (BC1, BC2, ..., BCp) übereinstimmt, **dadurch gekennzeichnet, daß** als Biometrieprofil ein Masterbiometrieprofil (MP1, MP2, ..., MPm) und ein Normalbiometrieprofil (NP1, NP2, ... NPm) vorgesehen sind, wobei bei einer Übereinstimmung von dem Biometriesignal (12) mit dem Normalbiometrieprofil (MP1, MP2, ..., MPm) eine Berechtigungsfreigabe (20) nur in beschränktem Umfang gegeben ist.

3. Vorrichtung nach einem der vorhergehenden Ansprüche, **dadurch gekennzeichnet, daß** dem Betriebsmittelcode (BC1, BC2, ..., BCp) eine Betriebsmittelressource (BR1, BR2, ..., BRp) zugeordnet ist, die eine Berechtigungsfreigabe (20) in beschränktem Umfang zuläßt.

4. Vorrichtung nach einem der vorhergehenden Ansprüche, **dadurch gekennzeichnet, daß** eine Einspeicherung oder Änderung der Betriebsmittelressourcen (BR1, BR2, ..., BRp) nur bei Übereinstimmung von Biometriesignal (12) und Biometrieprofil (MP1, MP2, ..., MPm, NP1, NP2, ..., NPn) zugelassen ist.

5. Vorrichtung nach einem der vorhergehenden Ansprüche, **dadurch gekennzeichnet, daß** ein Normalbiometrieprofil (NP1, NP2, ..., NPn) vorgesehen ist und bei Übereinstimmung des Biometriesignals (12) mit dem Normalbiometrieprofil (NP1, NP2, ..., NPn) eine Berechtigungsfreigabe (20) nur in beschränktem Umfang gegeben ist.

6. Vorrichtung nach einem der vorhergehenden Ansprüche, **dadurch gekennzeichnet, daß** sich der beschränkte Umfang der Berechtigungsfreigabe (20) auf eine Beschränkung der Nutzungsdauer und/oder der Fahrzeit und/oder der Fahrstrecke und/oder der Gangwahl und/oder der Drehzahl und/oder der Geschwindigkeit und/oder der Zugangsfunktionen sowie beliebigen Kombinationen bezieht.

7. Vorrichtung nach einem der vorhergehenden Ansprüche, **dadurch gekennzeichnet, daß** der beschränkte Umfang der Berechtigungsfreigabe (20) in den Normalberechtigtenressourcen (NR1, NR2, ..., NRn) abgebildet ist, die dem jeweiligen Normalbiometrieprofil (NP1, NP2, ..., NPn) zugeordnet sind.

8. Vorrichtung nach einem der vorhergehenden Ansprüche, **dadurch gekennzeichnet, daß** ein weiteres Biometrieprofil (MPm+1, NPn+1) und/oder ein weiterer Betriebsmittelcode (BCp+1) und/oder Ressourcen bzw. Ressourcenänderungen (NR1, NR2, ... NRn, BR1, BR2, ... BRp nur dann abzuspeichern sind, wenn das Biometriesignal (12) und das Biometrieprofil (MP1, MP2, ..., MPm, NP1, NP2, ..., NPn) übereinstimmen.

9. Vorrichtung nach einem der vorhergehenden Ansprüche, **dadurch gekennzeichnet, daß** ein Zugriff auf den Biometrieprofilspeicher (18, 19) und den Betriebsmittelcode- und -ressourcenspeicher (30) über eine Diagnoseschnittstelle (36) möglich ist.

10. Vorrichtung nach einem der vorhergehenden Ansprüche, **dadurch gekennzeichnet, daß** ein Zugreifen auf den Biometrieprofilspeicher (18, 19) und den Betriebsmittelcode- und -ressourcenspeicher (30) durch Identifikation eines Sonder-Betriebsmittels erlaubt ist und Anlern-, Änderungs- und Löschvorgänge dadurch auch von Benutzern ohne Masterberechtigung durchführbar sind.

11. Vorrichtung nach Anspruch 9, **dadurch gekennzeichnet, daß** zusätzlich zur Zugriffsmöglichkeit nach Anspruch 9 auch das Vorhandensein des Sonder-Betriebsmittels nach Anspruch 10 und die Übereinstimmung dessen Identität mit einem Sonder-Betriebsmittelprofil notwendig ist, wonach zusätzlich zur Befugnis zum Ändern, Löschen und Neueintragen von Benutzerund Betriebsmittelprofilen ein Sonder-Nutzungsumfang (=Ressource) aufgerufen und erteilt wird.

12. Vorrichtung nach einem der vorstehenden Ansprüche, **dadurch gekennzeichnet, daß** Betriebsmittel auch für den Zugang über wenigstens eine Fahrzeugtür sowie das Ent-/Verriegeln der Türen berechtigt sind.

13. Vorrichtung nach einem der vorstehenden Ansprüche, **dadurch gekennzeichnet, daß** Ressourcen auf das Überschreiten von Grenzvorgaben laufend überwacht werden und bei Überschreitungen Alarm ausgelöst und/oder die Stillsetzung des Fahrzeugs eingeleitet wird.

## Claims

1. Device for determining the driving authorization of a vehicle, having a biometry data acquisition means (10) which acquires biometry data of a user and feeds it as a biometry signal (12) to an evaluation unit (14), having at least one biometry profile memory (18, 19) in which at least one biometry profile (MP1, MP2, ..., MPm, NP1, NP2, ... NPm) is stored, an authorization release (20) to use functions of the vehicle taking place when the biometry signal (12) and the biometry profile (MP1, MP2, ..., MPm, NP1, NP2, ... NPm) correspond, the authorization release (20) taking place if an operating means signal (26) which is acquired by a code acquisition means (22) corresponds to an operating means code (BC1, BC2, ..., BCp) **characterized in that** a master biometry profile (MP1, MP2, ..., MPm) and a normal biometry profile (NP1, NP2, ... NPm) are provided as a biometry profile, it being possible to access the biometry profile memory (18, 19) and/or an operating means memory (30) which stores the operating means code (BC1, BC2, ..., BCp) only when the biometry signal (12) corresponds to the master biometry profile (MP1, MP2, ..., MPm).

2. Device for determining the driving authorization of a vehicle, having a biometry data acquisition means (10) which acquires biometry data of a user and feeds it as a biometry signal (12) to an evaluation unit (14), having at least one biometry profile memory (18, 19) in which at least one biometry profile (MP1, MP2, ..., MPm, NP1, NP2, ... NPm) is stored, an authorization release (20) to use functions of the vehicle taking place if the biometry signal (12) and the biometry profile (MP1, MP2, ..., MPm, NP1, NP2, ... NPm) correspond, the authorization release (20) taking place only if an operating means signal (26) which is acquired by a code acquisition means (22) corresponds to an operating means code (BC1, BC2, ..., BCp), **characterized in that** a master biometry profile (MP1, MP2, ..., MPm) and a normal biometry profile (NP1, NP2, ... NPm) being provided as a biometry profile, an authorization release (20) being provided only to a restricted degree when the biometry signal (12) corresponds to the normal biometry profile (MP1, MP2, ..., MPm).

3. Device according to one of the preceding claims, **characterized in that** the operating means code (BC1, BC2, ..., BCp) is assigned an operating means resource (BR1, BR2, ..., BRp) which permits an authorization release (20) to a restricted degree.

4. Device according to one of the preceding claims, **characterized in that** it is permitted to store or change the operating means resources (BR1, BR2, ..., BRp) only when the biometry signal (12) and biometry profile (MP1, MP2, ..., MPm, NP1, NP2, ..., NPn) correspond.

5. Device according to one of the preceding claims, **characterized in that** a normal biometry profile (NP1, NP2, ..., NPn) is provided and an authorization release (20) is provided only to a restricted degree when the biometry signal (12) corresponds to the normal biometry profile (NP1, NP2, ..., NPn).

6. Device according to one of the preceding claims, **characterized in that** the restricted degree of the authorization release (20) relates to a restriction in the period of use and/or the driving time and/or the distance and/or the gear speed selection and/or the engine speed and/or the velocity and/or the access functions and any desired combinations.

7. Device according to one of the preceding claims, **characterized in that** the restricted degree of the authorization release (20) is mapped into the normal authorized person resources (NR1, NR2, ..., NRn) which are assigned to the respective normal biometry profile (NP1, NP2, ..., NPn).

8. Device according to one of the preceding claims, **characterized in that** a further biometry profile (MPm+1, NPn+1) and/or a further operating means code (BCp+1) and/or resources or resource changes (NR1, NR2, ... NRn, BR1, BR2, ... BRp) are to be stored only if the biometry signal (12) and the biometry profile (MP1, MP2, ..., MPm, NP1, NP2, ..., NPn) correspond.

9. Device according to one of the preceding claims, **characterized in that** it is possible to access the biometry profile memory (18, 19) and the operating means code and resource memory (30) via a diagnostic interface (36).

10. Device according to one of the preceding claims, **characterized in that** it is permitted to access the biometry profile memory (18, 19) and the operating means code and resource memory (30) by identification of a special operating means, and ID setting operations, change operations and delete operations can thus also be carried out by users without master authorization.

11. Device according to Claim 9, **characterized in that**, in addition to the access possibility according to Claim 9, the presence of the special operating means according to Claim 10 and the correspondence of its identity to a special operating means profile are necessary, according to which, in addition to the authorization to change, delete and re-enter user and operating means profiles, a special degree of use (=resource) is called and allocated.

12. Device according to one of the preceding claims, **characterized in that** operating means are also authorized for access via at least one vehicle door and the unlocking/locking of the doors.

13. Device according to one of the preceding claims, **characterized in that** resources are continuously monitored for the upward transgression of predefined limiting values, and an alarm is issued and/or the deactivation of the vehicle is initiated in the case of upward transgressions.

## Revendications

1. Dispositif pour déterminer si une personne est autorisée à conduire un véhicule, comprenant un capteur de données biométriques (10) qui saisit les données biométriques d'un utilisateur et les fournit comme signal biométrique (12) à une unité d'exploitation (14),
au moins une mémoire de profil biométrique (18,19) contenant au moins un profil biométrique (MP1, MP2, ..., MPm, NP1, NP2, ..., NPm),
une émission d'autorisation (20) pour autoriser les fonctions du véhicule étant produite lorsque le signal biométrique (12) et le profil biométrique (MP1, MP2, ..., MPm, NP1, NP2, ..., NPm), concordent,
l'autorisation de libération (20) se faisant si un signal de moyens d'entraînement (26) saisi par le capteur de code (22) correspond à un code de moyens d'entraînement (BC1, BC2, ..., BCp),
**caractérisé en ce que**
le profil biométrique est un profil biométrique maître (MP1, MP2, ..., MPm), et un profil biométrique normal (NP1, NP2, ..., NPm),
et seulement la concordance entre le signal biométrique (12) et le profil biométrique maître (MP1, MP2, ..., MPm), permettent un accès à la mémoire de profil biométrique (18, 19) et/ou à une mémoire de moyens de fonctionnement (30) qui contient le code de moyens de fonctionnement (BC1, BC2, ..., BCp).

2. Dispositif pour déterminer si une personne est autorisée à conduire un véhicule comprenant un capteur de données biométriques (10) qui saisit les données biométriques d'un utilisateur et les fournit comme signal biométriques (12) à une unité d'exploitation (14),
au moins une mémoire à profil biométrique (18, 19) contenant au moins un profil biométrique (MP1, MP2, ..., MPm, NP1, NP2, ..., NPm),
l'autorisation de libération (20) pour utiliser les fonctions du véhicule étant produite si le signal biométrique (12) et le profil biométrique (MP1, MP2, ..., MPm, NP1, NP2, ..., NPm) concordent,
l'autorisation de libération (20) se faisant si un signal de moyens d'entraînement (26) saisi par un capteur de code (22) concorde avec un code de moyens d'entraînement (BC1, BC2, ..., BCp),
**caractérisé en ce que**
le profil biométrique est un profil biométrique maître (MP1, MP2, ..., MPm) et un profil biométrique normal (NP1, NP2, ..., NPm), et en cas de concordance entre le signal biométrique (12) et le profil biométrique normal (NP1, NP2, ..., NPm), une autorisation de libération (20) n'est émise que de manière limitée.

3. Dispositif selon l'une des revendications précédentes,
**caractérisé en ce que**
le code de moyens de fonctionnement (BC1, BC2, ..., BCp) comporte une ressource de moyens de fonctionnement (BR1, BR2, ... BRp) qui permet une libération d'autorisation (20) de façon limitée.

4. Dispositif selon l'une des revendications précédentes,
**caractérisé en ce qu'**
on enregistre ou on modifie les ressources de moyens de fonctionnement (BR1, BR2, ..., BRp) seulement si le signal biométrique (12) et le profil biométrique (MP1, MP2, ..., MPm, NP1, NP2, ..., NPn) concordent.

5. Dispositif selon l'une des revendications précédentes,
**caractérisé en ce qu'**
il est prévu un profil biométrique normal (NP1, NP2, ..., NPn) et, en cas de concordance du signal biométrique (12) avec le profil biométrique normal (NP1, NP2, ..., NPn), une autorisation de libération (20) n'est émise que de façon limitée.

6. Dispositif selon l'une des revendications précédentes,
**caractérisé en ce que**
l'autorisation de libération, limitée (20), concerne une limitation de la durée d'utilisation et/ou du temps de conduite et/ou du trajet et/ou du choix du rapport de vitesse et/ou de la vitesse de rotation et/ou de la vitesse et/ou des fonctions d'accès ainsi que des combinaisons quelconques.

7. Dispositif selon l'une des revendications précédentes,
**caractérisé en ce que**
l'autorisation de libération limitée (20) est copiée dans les ressources d'autorisation normale (NR1, NR2, ..., NRn), associées au profil biométrique normal respectif (NP1, NP2, .., NPn).

8. Dispositif selon l'une des revendications précédentes,
**caractérisé en ce qu'**
un autre profil biométrique (MPm+1, NPn+1) et/ou un autre code de moyens de fonctionnement (BCp+1) et/ou des ressources ou des variations de ressources (NR1, NR2, ..., NRn, BR1, BR2, ..., BRp), ne sont à enregistrer que si le signal biométrique (12) et le profil biométrique (MP1, MP2, ..., MPm, NP1, NP2, ..., NPn) concordent.

9. Dispositif selon l'une des revendications précédentes,
**caractérisé en ce qu'**
un accès à la mémoire de profil biométrique (18, 19) et à la mémoire de code de moyens de fonctionnement et de ressources (30) est possible par une interface de diagnostic (36).

10. Dispositif selon l'une des revendications précédentes,
**caractérisé en ce qu'**
un accès à la mémoire de profil biométrique (18, 19) et à la mémoire de code de moyens de fonctionnements et de ressources (30) est autorisé par L'identification d'un moyen de fonctionnement particulier et les opérations d'apprentissage de changement et d'effacement peuvent ainsi être également effectuées par les utilisateurs sans nécessité d'autorisation maître.

11. Dispositif selon la revendication 9,
**caractérisé en ce qu'**
en plus de la possibilité d'accès selon la revendication 9, il faut également l'existence de moyens de fonctionnement particuliers selon la revendication 10 et la concordance de son identité avec le profil particulier de moyens de fonctionnement, et ensuite en plus de l'autorisation de changer, d'effacer et d'enregistrer de nouveau les profils d'utilisateur et de moyens de fonctionnement, on appelle et on attribue un domaine d'utilisation particulier (ressources).

12. Dispositif selon l'une des revendications précédentes,
**caractérisé en ce que**
le moyen de fonctionnement autorise également l'accès par au moins une portière du véhicule ainsi que le verrouillage/déverrouillage des portières.

13. Dispositif selon l'une des revendications précédentes,
**caractérisé en ce qu'**
on surveille en continu les ressources pour contrôler le dépassement des limites prédéfinies et, en cas de dépassement, on déclenche une alarme et/ou on commande l'arrêt du véhicule.
